# EUROPÄISCHE PATENTSCHRIFT

(11) **EP 0 317 829 B1**
(45) Veröffentlichungstag und Bekanntmachung des Hinweises auf die Patenterteilung: **23.03.1994**
(21) Anmeldenummer: 88118678.7
(22) Anmeldetag: 09.11.1988
(51) Int. Cl.: H04L 7/02

(54) **Verfahren und Anordnung zur Erzeugung eines Korrektursignals für eine digitale Taktrückgewinnungs-Einrichtung**
Method and apparatus for the generation of a correcting signal for a digital clock recovery device
Méthode et appareil pour la génération d'un signal de correction pour un dispositif numérique récupération d'horloge

(30) Priorität: 24.11.1987 DE 3739834; 19.02.1988 DE 3805259
(43) Veröffentlichungstag der Anmeldung: 31.05.1989
(73) Patentinhaber: SIEMENS AKTIENGESELLSCHAFT, 80333 München (DE)
(72) Erfinder: Sarközi, Imre, Dipl.-Ing., D-8000 München 70 (DE)

(56) Entgegenhaltungen:
- EP-A- 0 275 406
- EP-A- 0 313 953
- DE-A- 2 641 547
- US-A- 3 582 789
- A.E.Ü.,Heft 11, November 1968, Seiten 509 bis 513.

## Beschreibung

Die Erfindung bezieht sich auf ein Verfahren zur Erzeugung eines Korrektursignals in einer digitalen Taktrückgewinnungseinrichtung bei Erreichung eines definierten Phasenabstands zwischen einem Digitalsignal und einem ersten, diesem zugeordneten Datenhilfstakt, der eine sich mit dem Phasenabstand ändernde Auswahl eines von mehreren Hilfstakten darstellt, die die gleiche Frequenz, die etwas größer oder kleiner als die Bitrate des Digitalsignals ist, und untereinander einen gleichen Phasenabstand aufweisen.

Aus A.E.Ü., Heft 11, Seite 509 bis 513 ist ein Vorschlag zur Taksynchronisierung bekannt, bei der von den Flanken eines empfangenen Digitalsignals Impulse abgeleitet werden, die mit einem Takt, dessen Frequenz der Datenrate entspricht, verglichen werden. Die so gewonnenen Korrektursignale regeln über einen Frequenzteiler die Phase des Empfängertaktes nach. Die Regelung ist für positiv und negativ Frequenzabweichungen des empfangenen Digitalsignals geeignet. Dieser Aufwand ist bei vielen Anwendungsfällen jedoch nicht erforderlich.

Verfahren zur Erzeugung von Korrektursignalen sind auch aus älteren Vorschlägen bekannt. Nach einem ersten (87117233.4) gibt ein Phasensensor ein Korrektursignal ab, wenn sich die wirksame Flanke des Datenhilfstakts einer Flanke des Digitalsignals auf weniger als einen festgesetzten Zeitabstand nähert. Dazu benötigt er eine Verzögerungseinrichtung. Beim zweiten (P 37 36 351.4) ergibt sich das Korrektursignal, wenn die wirksamen Flanken des Digitalsignals und eines ebenfalls aus einem Hilfstakt abgeleiteten besonderen Taktes übereinstimmen, der dieselbe Frequenz wie der Datenhilfstakt aufweist und gegenüber diesem um einen bestimmten Wert in der Phase verschoben ist.

Aufgabe der Erfindung ist es, ein Verfahren anzugeben, das sich ohne Verzögerungseinrichtung und auch ohne besonderen Takt realisieren läßt und damit in integrierter Schaltkreistechnik auch für Bitraten gleich oder größer 34 Mbit/s durchführbar ist.

Ausgehend von einem Verfahren der einleitend geschilderten Art wird diese Aufgabe dadurch gelöst, daß der Datenhilfstakt mit der Vorderflanke der Impulse des Digitalsignals solange abgetastet wird, bis über eine Zustandsänderung bei den Abtastproben eine Flanke einer ausgewählten Flankenart des Datenhilfstaktes erkannt wird, und daß dann das Korrektursignal ausgelöst wird. Flankenarten sind entweder ansteigende oder abfallende Flanken.

Vorteilhaft ist es dabei, wenn die Abtastung während der Dauer des Korrektursignals blockiert wird.

Vorteilhaft ist es weiter, wenn als erster Datenhilfstakt ein symmetrischer Puls ausgewählt wird und wenn für die Erkennung die Flankenart ausgewählt wird, bei deren Flanken der definierte Phasenabstand 0,5 UI (Unit Interval) beträgt.

Der definierte Phasenabstand bzw. der festgesetzte Zeitabstand gilt als Maß, wobei sich der gemessene Phasen- bzw. Zeitabstand zwischen den wirksamen Flanken des Datenhilfstakts und der Vorderflanken der Impulse des Digitalsignals in einem definierten Bereich ständig ändert. Wenn der gemessene Abstand das Maß erreicht, wird das Korrektursignal ausgelöst.

Anordnungen zur Durchführung dieser Verfahren sind den Sachansprüchen zu entnehmen.

Anhand von Ausführungsbeispielen wird die Erfindung nachstehend näher erläutert.
- Figur 1: zeigt ein Blockschaltbild des erfindungsgemäßen Phasensensors für ein binäres Digitalsignal,
- Figur 2: zeigt ein Impulsdiagramm zur Erläuterung der Funktion des Phasensensors nach Figur 1,
- Figur 3: zeigt ein Blockschaltbild des erfindungsgemäßen Phasensensors für ein bipolares Digitalsignal,
- Figur 4: zeigt das Blockschaltbild eines handelsüblichen D-Flipflops mit Testeingängen und
- Figur 5: zeigt detailliert einen ersten erfindungsgemäßen Phasensensor,
- Figur 6: zeigt ein Impulsdiagramm zur Erläuterung des ersten Phasensensors,
- Figur 7: zeigt detailliert einen zweiten erfindungsgemäßen Phasensensor und
- Figur 8: zeigt ein Impulsdiagramm zur Erläuterung des zweiten Phasensensors.

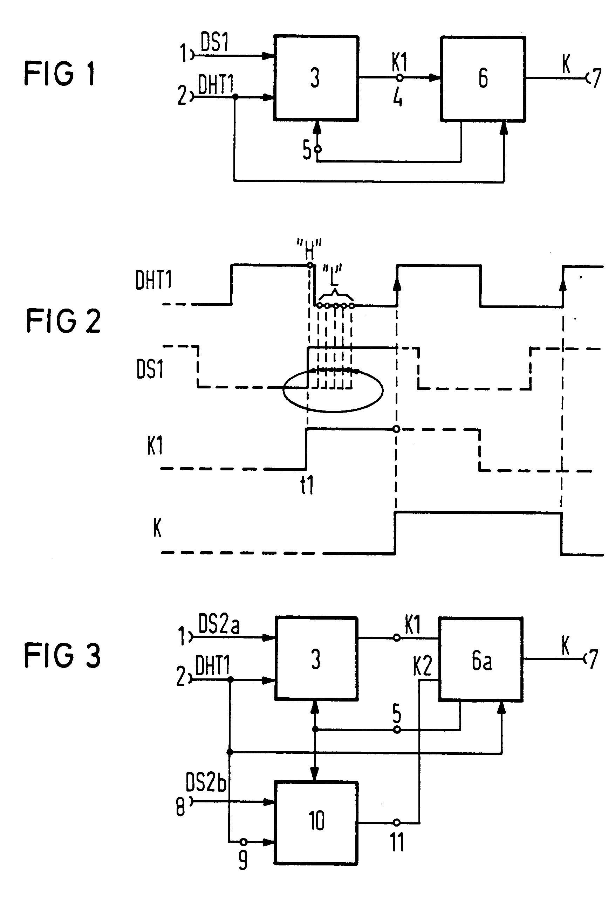

Figur 1 zeigt einen erfindungsgemäßen Phasensensor für ein binäres Digitalsignal DS1 mit einer Abtast- und Halteschaltung 3 und einer Einrichtung 6 zur Erzeugung des Korrektursignals K. Figur 2 zeigt die zugehörigen Pulse.

Die Vorderflanken des Digitalsignals DS1 am Eingang 1 bewegen sich in Abhängigkeit vom Vorzeichen der Frequenzabweichung gegenüber dem Datenhilfstakt DHT1 am Eingang 2 von Taktperiode zu Taktperiode entweder nur links oder nur rechts von diesen ausgewählten abfallenden Flanken. In Figur 2 wandern sie nur rechts, wie es gestrichelt angedeutet ist, bis die momentane, durch eine ausgezogene Linie dargestellte Phasenlage erreicht ist. Mit der vorderen wirksamen Flanke der Impulse des Digitalsignals DS1 wird der Datenhilfstakt DHT1 abgetastet. Durch Auswertung der Abtastproben wird die abfallende Flanke des Datenhilfstaktes DHT1 erkannt. Bei Erkennung der Zustandsänderung der Abtastproben zur Zeit t1 wird ein Korrekturanforderungssignal K1 am Anschluß 4 erzeugt. Der günstige Phasenabstand von 0,5 UI zwischen den wirksamen ansteigenden Flanken des Datenhilfstakts DHT1 und der Vorderflanke der Impulse des Digitalsignals DS1 ergibt sich aus dem Abstand zwischen der abfallenden und der ansteigenden Flanke einer Periode des Datenhilfstakts DHT1. Für die erforderliche Genauigkeit muß die Symmetrie des Datenhilfstakts DHT1 groß sein. Dies läßt sich bei einer Integration von den Toleranzen weitestgehend unabhängig realisieren. In der Einrichtung 6 wird das Korrektursignal K am Ausgang 7 synchron zum Datenhilfstakt DHT1 erzeugt.

Im Gegensatz zum zweiten älteren Vorschlag wird dies ohne einen vom Hilfstakt abgeleiteten besonderen Takt erreicht.

Figur 3 zeigt einen erfindungsgemäßen Phasensensor für ein bipolares Digitalsignal mit den Halbwellen DS2a und DS2b. Die erste Halbwelle DS2a wird der Abtast- und Halteschaltung 3 zugeführt. Für die zweite Halbwelle DS2b wird eine weitere Abtast- und Halteschaltung 10 eingeführt. Die Einrichtung 6a zur Erzeugung des Korrektursignals K hat zwei Eingänge für die Korrekturanforderungssignale K1 und K2 aus beiden Abtast- und Halteschaltungen 3 und 10. Sie führt eine ODER-Verknüpfung beider Korrekturanforderungssignale K1 und K2 durch.

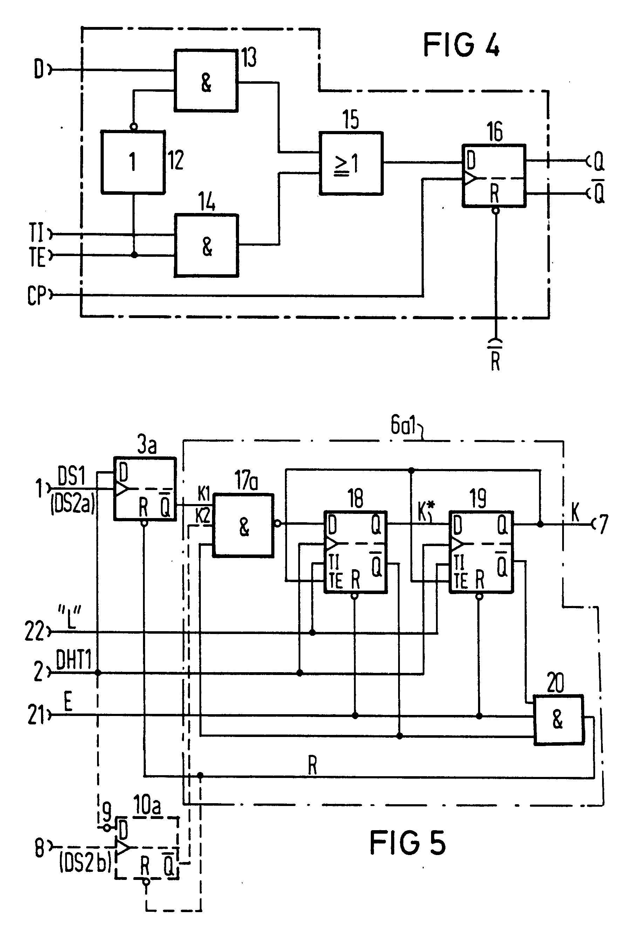

Figur 4 zeigt das Blockschaltbild eines handelsüblichen D-Flipflops mit Testeingängen. Es enthält neben dem D-Flipflop 16 einen Inverter 12, UND-Gatter 13 und 14 und ein ODER-Gatter 15.

Neben einem D-Eingang, einem Takteingang CP, einem Rücksetzeingang R̅ und einem Q- und einem Q̅ Ausgang sind ein Testeingang TI und ein Testfreigabeeingang TE vorgesehen.

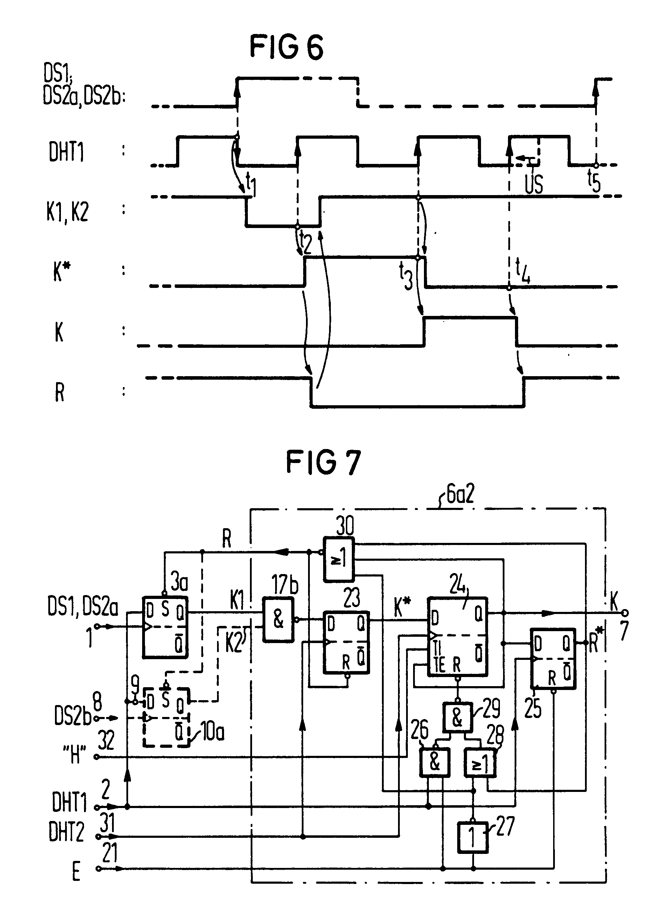

Figur 5 zeigt einen erfindungsgemäßen, in eine mit negativer Frequenzabweichung arbeitende Taktrückgewinnungseinrichtung einsetzbaren Phasensensor detailliert. Für ein binäres Digitalsignal DS1 wird der Schaltungsteil mit den ausgezogenen Linien benötigt. Für ein bipolares Digitalsignal DS2a, DS2b wird zusätzlich der Schaltungsteil mit den gestrichelten Linien gebraucht. Die Anordnung besteht aus Abtast- und Halteschaltungen mit einfachen D-Flipflops 3a und 10a und einer Einrichtung 6a1 zur Erzeugung des Korrektursignals K. Letztere enthält eine erste Stufe mit einem NAND-Gatter 17a und einem D-Flipflop mit Testeingängen 18, eine zweite Stufe mit einem D-Flipflop mit Testeingängen 19 und eine Rücksetzstufe mit einem UND-Gatter 20.

Der mit digitalen integrierten D-Flipflop-Zellen realisierte Phasensensor arbeitet unter speziellen Bedingungen. Für das sichere Schalten eines D-Flipflops muß gewährleistet sein, daß das Signal am D-Eingang während der Abtaktung keinem Zustandswechsel unterliegt. Andernfalls könnten instabile Schaltvorgänge zustande kommen, wobei dann der Ausgangszustand des D-Flipflops nicht definierbar ist. Es würde ein metastabiler Zustand entstehen. Da der Phasensensor aber gerade der Erkennung eines Wechsels im Datenhilfstakt DHT1 dient, ist damit die Wahrscheinlichkeit des Auftretens instabiler Schaltvorgänge relativ hoch. Dies bedeutet, daß das Korrekturanforderungssignal K1 oft instabil werden kann. Durch eine mehrstufige Abtastung des Korrekturanforderungssignals K1 können jedoch metastabile Zustände unterdrückt werden. Dies wird bei der synchronen Erzeugung des Korrektursignals K mittels der D-Flipflops mit Testeingängen 18 und 19 zweistufig realisiert. Sowohl die Erzeugung des Korrektursignals K als auch die Rücksetzung sind synchron zum Datenhilfstakt DHT1.

Die Wirkungsweise dieses Phasensensors wird nachfolgend auch anhand des Impulsdiagramms in Fig. 6 erläutert:
Das Einstellsignal E am Eingang 21 mit dem Zustand logisch "L" setzt alle D-Flipflops 3a, 10a, 18 und 19 in ihren Ausgangszustand. Die Q-Ausgänge der D-Flipflops 18 und 19 sowie der Ausgang des UND-Gatters 20 erhalten den Zustand logisch "L". Daraufhin nehmen die Q̅-Ausgänge der D-Flipflops 3a und 10a den Zustand logisch "H" und zuletzt der Ausgang des NAND-Gatters 17a den Zustand logisch "L"an. Über die Rückkopplung vom Q-Ausgang des D-Flipflops 19 zu den TE-Eingängen der D-Flipflops 18 und 19 sind diese auf D-Modus geschaltet. Dieser Zustand bleibt solange unverändert, wie die Abtastwerte den Zustand logisch "L¨ aufweisen. Dies entspricht amQ̅-Ausgang des D-Flipflops 3a einem Zustand logisch "H". Hat der Abtastwert dagegen den Zustand logisch "H" (t₁) und dementsprechend der Q̅-Ausgang den Zustand logisch "L", dann bedeutet dies ein Korrekturanforderungssignal K1. Dieses wird mit der hier wirksamen ansteigenden Flanke des Datenhilfstaktes DHT1 über das NAND-Gatter 17a in das D-Flipflop 18 als Vorkorrektursignal K* zum Zeitpunkt t₂ eingelesen. Ist dieser Einlesevorgang stabil abgelaufen, dann wird in der nächsten Periode des Datenhilfstakts DHT1 mittels des Vorkorrektursignals K* vom D-Flipflop 19 am Q-Ausgang ein synchrones Korrektursignal K erzeugt (t₃). Im anderen Fall geschieht dies nicht. Das Korrektursignal K mit dem logischen Zustand "H" schaltet gleichzeitig die D-Flipflops 18 und 19 auf die Testeingänge TI um, die über den Eingang 22 auf den Zustand logisch "L¨ gebracht wurden, um in der anschließenden Periode des Datenhilfstakts DHT1 das Korrektursignal K zum Zeitpunkt t₄ abzuschalten. Das Korrektursignal K löst zum Zeitpunkt t₃ eine Umschaltung US in den Hilfstakten aus, wobei die wirksame Flanke der nächsten DHT1-Periode durch die Umschaltung mit dem Phasenabstand der Hilfstakte zum Zeitpunkt t₄ nach vorne versetzt und damit ein Phasenausgleich geschafft wird. Während der Erzeugung des Korrektursignals K (zwischen den Zeitpunkten t₂ und t₄) blockieren die Q̅-Ausgänge der D-Flipflops 18 und 19 über das UND-Gatter 20 eine weitere Abtastung. Zum Zeitpunkt t₅ kann der Phasensensor erneut die Phasenlage des Digitalsignals DS1 zum DHT1 durch Abtastproben überprüfen.

Beim Anlegen eines bipolaren Digitalsignals DS2a, DS2b an die Eingänge 1 und 8 kann das Korrektursignal K sowohl vom Korrekturanforderungssignal K1 als auch vom Korrekturanforderungssignal K2 erzeugt werden.

Fig. 7 zeigt einen zweistufigen "bisynchronen" Phasensensor für eine mit positiver Frequenzabweichung arbeitende Taktrückgewinnungseinrichtung. Bisynchron bedeutet, daß das Korrektursignal K zur Schaffung eines Laufzeitausgleichs für die Umschaltung synchron zu einem zweiten abgeleiteten Datenhilfstakt DHT2 erzeugt wird, wobei die Abtast- und Halteschaltung 3a und 10a und die mit ihr in fester Verbindung stehende Rücksetzstufe 26 bis 30 weiterhin synchron zum Datenhilfstakt DHT1 laufen.

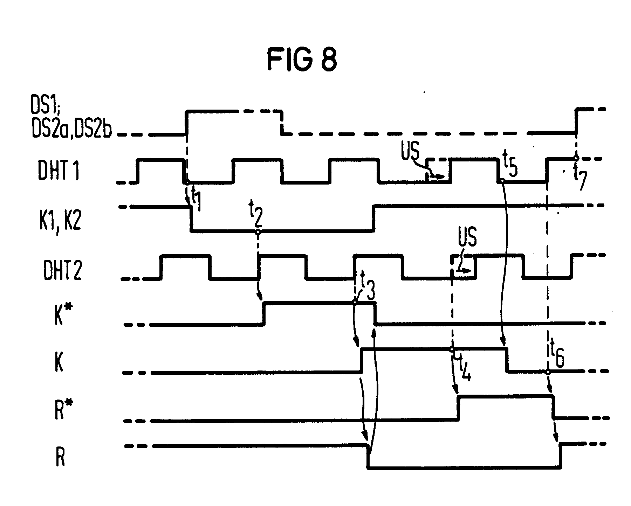

Die Anordnung enthält als Abtast- und Halteschaltung ein D-Flipflop 3a und bei einer Verarbeitung bipolarer Digitalsignale zusätzlich ein D-Flipflop 10a. Der Rest der Schaltung ist eine Einrichtung 6a2 zur Erzeugung des Korrektursignals K. Diese Einrichtung enthält eine erste Stufe mit einem NAND-Gatter 17b und einem D-Flipflop 23, eine zweite Stufe mit einem D-Flipflop mit Testeingängen 24 und eine Rücksetzstufe mit einem Inverter 27, mit NAND-Gattern 26 und 29, mit einem ODER-Gatter 28, mit einem NOR-Gatter 30 und mit einem D-Flipflop 25. Die Wirkungsweise dieser Anordnung ist auch aus dem Impulsdiagramms in Figur 8 ersichtlich.

Das Einstellsignal E versetzt mit seinem Zustand logisch "L¨ die Einrichtung 6a2 in ihren Ausgangszustand, indem alle D-Flipflops 3a, 23, 24 und 25 unmittelbar oder über die Gatter zurückgesetzt werden. An den Digitalsignal-Eingang 1 wird das binäre Digitalsignal DS1 und an den Datenhilfstakt-Eingang 2 des Datenhilfstakts DHT1 angelegt. Im D-Flipflop 3a wird der Datenhilfstakt DHT1 dann mit dem Digitalsignal DS1 abgetastet. Nimmt der Q-Ausgang bei der Abtastung einen Zustand logisch "L" an, so bedeutet dies ein Korrekturanforderungssignal K1 (t₁). Nach der Rücksetzung über den S-Eingang geht der Q-Ausgang in einen Zustand logisch "H" über.

Liegen an den Digitalsignal-Eingängen 1 und 8 Halbwellen eines bipolaren Digitalsignals DS2a und DS2b, dann kann vom D-Flipflop 10a ein weiteres Korrekturanforderungssignal K2 erzeugt werden. Nimmt dann in der ersten Stufe einer der beiden Eingänge des NAND-Gatters 17b einen Zustand logisch "L" an, dann erhält der D-Eingang des D-Flipflops 23 einen Zustand logisch "H". Ist dieser Vorgang stabil abgelaufen, wird dieser Zustand mit dem Datenhilfstakt DHT2, der gegenüber dem Datenhilfstakt DHT1 einen festen Phasenabstand hat, als Vorkorrektursignal K* in das D-Flipflop 23 eingelesen (t₂). Dieses Vorkorrektursignal K* ist unter der Voraussetzung, daß ein metastabiler Vorgang in diesem Signal keine Fehlsteuerung verursachen kann, für die Vorbereitung des Umschaltens günstig verwendbar. In der anschließenden Periode des Datenhilfstakts DHT2 wird dieser Zustand logisch "H" zum Zeitpunkt t₃ weiter in das D-Flipflop 24 der zweiten Stufe eingelesen und es entsteht an dessen Q-Ausgang das Korrektursignal K. Dieses löst die Umschaltung US aus, wobei die wirksamen Flanken beider Datenhilfstakte DHT1 und DHT2 mit dem Phasenabstand der Hilfstakte nach hinten versetzt werden, so daß zum Zeitpunkt t₄ dieser Zustand logisch "H" durch den Datenhilfstakt DHT1 weiter in das D-Flipflop 25 der Rücksetzstufe eingelesen wird und dessen Q-Ausgang als Rücksetzsignal R* ebenfalls den Zustand logisch "H¨ erhält. Nach der abfallenden Flanke des Datenhilfstakts DHT1 (t₅) wird das D-Flipflop 24 über die Gatterkombination 26, 28 und 29 und den Rücksetz-Eingang zurückgesetzt und damit das Korrektursignal K beendet.

Die D-Flipflops 3a, 10a und 23 werden über das Korrektursignal K mit dem Rücksetzsignal R zurückgesetzt und solange blockiert, bis der Q-Ausgang des D-Flipflops 25 mit dem Datenhilfstakt DHT1 zum Zeitpunkt t₆ wieder einen Zustand logisch "L¨ annimmt. Zum Zeitpunkt t₇ wird erneut die Phasenlage des Digitalsignals DS1 überprüft.

Mit der Einführung des zweiten Datenhilfstaktes DHT2, dessen Phasenabstand zum Datenhilfstakt DHT1 zur Anpassung der Laufzeiten unterschiedlich wählbar ist, kann die Wahrscheinlichkeit des Entstehens metastabiler Zustände am Vorkorrektursignal K* unter Umständen steigen. Durch den Einsatz eines D-Flipflops 24 mit Testeingängen in der zweiten Stufe kann jedoch der Einfluß solcher Zustände auf das Korrektursignal K vermieden werden.

Beide Phasensensoren sind in integrierter HCMOS-Technologie für Bitraten ≧ 34 Mbit/s realisierbar.

## Patentansprüche

1. Verfahren zur Erzeugung eines Korrektursignals (K) in einer digitalen Taktrückgewinnungseinrichtung bei Erreichung eines definierten Phasenabstands zwischen einem Digitalsignal (DS1; DS2a,DS2b) und einem ersten, diesem zugeordneten Datenhilfstakt (DHT1), der eine sich mit dem Phasenabstand ändernde Auswahl eines von mehreren Hilfstakten darstellt, die die gleiche Frequenz, die etwas größer oder kleiner als die Bitrate des Digitalsignals (DS1;DS2a,DS2b) ist, und untereinander einen gleichen Phasenabstand aufweisen,
**dadurch gekennzeichnet,**
daß der Datenhilfstakt (DHT1) mit der Vorderflanke der Impulse des Digitalsignals (DS1;DS2a,DS2b) solange abgetastet wird, bis über eine Zustandsänderung bei den Abtastproben eine Flanke einer ausgewählten Flankenart des Datenhilfstaktes (DHT1) erkannt wird, und
daß dann das Korrektursignal (K) ausgelöst wird.

2. Verfahren nach Anspruch 1,
**dadurch gekennzeichnet,**
daß die Abtastung während der Dauer des Korrektursignals (K) blockiert wird.

3. Verfahren nach Anspruch 1,
**dadurch gekennzeichnet,**
daß als erster Datenhilfstakt (DHT1) ein symmetrischer Puls ausgewählt wird und
daß für die Erkennung die Flankenart ausgewählt wird, bei deren Flanken der definierte Phasenabstand 0,5 UI beträgt.

4. Phasensensor mit logischen Bauelementen zur Erzeugung eines Korrektursignals (K) in einer digitalen Taktrückgewinnungseinrichtung bei Erreichung eines definierten Phasenabstands zwischen einem Digitalsignal (DS1; DS2a,DS2b) und einem ersten, diesem zugeordneten Datenhilfstakt (DHT1), der eine sich mit dem Phasenabstand ändernde Auswahl eines von mehreren Hilfstakten darstellt, die die gleiche Frequenz, die etwas größer oder kleiner als die Bitrate des Digitalsignals (DS1; DS2a, DS2b) ist, und untereinander einen gleichen Phasenabstand aufweisen,
**dadurch gekennzeichnet,**
daß eine erste Abtast- und Halteschaltung (3) mit einem ersten Datenhilfstakt-Eingang (2) und mit einem ersten Digitalsignal-Eingang (1) vorgesehen ist, so daß mit dem Digitalsignal (DS1, DS2a, DS2b) der Datenhilfstakt (DHT1) abgetastet wird, und
daß eine Einrichtung (6) zur Erzeugung des Korrektursignals (K) vorgesehen ist, die der Abtast- und Halteschaltung (3) nachgeschaltet ist.

5. Phasensensor nach Anspruch 4,
**dadurch gekennzeichnet,**
daß als erste Abtast- und Halteschaltung (3) ein erstes D-Flipflop (3a) vorgesehen ist, dessen D-Eingang mit dem ersten Datenhilfstakt-Eingang (2) und dessen Takteingang mit dem ersten Digitalsignal-Eingang (1) verbunden sind.

6. Phasensensor für eine mit negativer Frequenzabweichung arbeitende Taktrückgewinnungseinrichtung nach Anspruch 4 oder 5, **dadurch gekennzeichnet,**
daß in einer Einrichtung (6a1) zur Erzeugung des Korrektursignals (K)
ein erstes NAND-Gatter (17a), dessen erster Eingang mit dem Ausgang der ersten Abtast- und Halteschaltung (3,3a) verbunden ist,
ein erstes D-Flipflop mit Testeingängen (18), dessen D-Eingang mit dem Ausgang des ersten NAND-Gatters (17a), dessen Takteingang mit dem ersten Datenhilfstakt-Eingang (2), dessen TI-Eingang mit einem Eingang (22) für einen logischen Zustand "L", dessen Rücksetzeingang mit einem Einstellsignal-Eingang (21) und dessen Q̅-Ausgang mit dem zweiten Eingang des ersten NAND-Gatters (17a) verbunden sind,
ein zweites D-Flipflop mit Testeingängen (19), dessen D-Eingang mit dem Q-Ausgang des ersten D-Flipflops mit Texteingängen (18), dessen Takteingang mit dem ersten Datenhilfstakt-Eingang (2), dessen Rücksetzeingang mit dem Einstellsignal-Eingang (21), dessen TI-Eingang mit dem Eingang (22) für einen logischen Zustand "L¨ und dessen Q-Ausgang mit einem Korrektursignal-Ausgang (7) sowie mit den TE-Eingängen des ersten und zweiten D-Flipflops mit Testeingängen (18,19) verbunden sind, und
ein erstes UND-Gatter (20) vorgesehen sind, dessen erster Eingang mit dem Q̅-Ausgang des zweiten D-Flipflops mit Testeingängen (19), dessen zweiter Eingang mit dem Einstellsignal-Eingang (21) und den Rücksetzeingängen des ersten und zweiten D-Flipflops mit Testeingängen (18,19), dessen dritter Eingang mit dem zweiten Eingang des ersten NAND-Gatters (17a) und dessen Ausgang mit einem Rückstelleingang der ersten Abtast- und Halteschaltung (3,3a) verbunden sind.

7. Phasensensor für eine mit positiver Frequenzabweichung arbeitende Taktrückgewinnungseinrichtung nach Anspruch 4 oder 5,
**dadurch gekennzeichnet,**
daß in einer Einrichtung (6a2) zur Erzeugung des Korrektursignals (K)
ein zweites NAND-Gatter (17b), dessen erster Eingang mit dem Ausgang der ersten Abtast- und Halteschaltung (3,3a) verbunden ist,
ein zweites D-Flipflop (23), dessen D-Eingang mit dem Ausgang des zweiten NAND-Gatters (17b), dessen Takteingang mit einem Eingang (31) für einen zweiten Datenhilfstakt (DHT2), der gegenüber dem ersten Datenhilfstakt (DHT1) einen festen Phasenabstand hat, und dessen Rücksetzeingang mit einem Setzeingang des ersten D-Flipflops (3a) verbunden ist,
ein drittes D-Flipflop mit Testeingängen (24), dessen D-Eingang mit dem Q-Ausgang des zweiten D-Flipflops (23), dessen Takteingang mit dem Eingang (31) für den zweiten Datenhilfstakt (DHT2), dessen Q-Ausgang mit dem Korrektursignal-Ausgang (7) und dessen Testeingang mit einem Eingang (32) für einen logischen Zustand "H" verbunden sind,
ein drittes D-Flipflop (25), dessen D-Eingang mit dem Q-Ausgang und dem Testfreigabeeingang des dritten D-Flipflops mit Testeingängen (24) und dessen Rücksetzeingang mit dem Einstellsignal-Eingang (21) verbunden sind,
ein drittes NAND-Gatter (26), dessen erster Eingang mit dem ersten Datenhilfstakt-Eingang (2) und dessen zweiter Eingang mit dem Einstellsignal-Eingang (21) verbunden sind, ein Inverter (27), dessen Eingang mit dem Einstellsignal-Eingang (21) verbunden ist,
ein ODER-Gatter (28) dessen erster Eingang mit dem Ausgang des Inverters (27) und dessen zweiter Eingang mit dem Q-Ausgang des dritten D-Flipflops (25) verbunden sind,
ein viertes NAND-Gatter (29), dessen erster Eingang mit dem Ausgang des dritten NAND-Gatters (26), dessen zweiter Eingang mit dem Ausgang des ODER-Gatters (28) und dessen Ausgang mit dem Rücksetzeingang des dritten D-Flipflops mit Testeingängen (24) verbunden sind, und
ein NOR-Gatter (30) vorgesehen sind, dessen erster Eingang mit dem Q-Ausgang des dritten D-Flipflops (25), dessen zweiter Eingang mit dem Q-Ausgang des dritten D-Flipflops mit Testeingängen (24), dessen dritter Eingang mit dem Ausgang des Inverters (27) und dessen Ausgang mit dem Setzeingang des ersten D-Flipflops (3a) und dem Rücksetzeingang des zweiten D-Flipflops (23) verbunden sind.

8. Phasensensor nach Anspruch 4 oder 5,
**dadurch gekennzeichnet,**
daß eine zweite Abtast- und Halteschaltung (10) mit einem zweiten Digitalsignal-Eingang (8) und mit einem zweiten Datenhilfstakt-Eingang (9) vorgesehen ist und
daß eine leitende Verbindung zwischen beiden Eingängen (2,9) für den ersten Datenhilfstakt (DHT1) vorgesehen ist.

9. Phasensensor nach den Ansprüchen 6 und 8,
**dadurch gekennzeichnet,**
daß als zweite Abtast- und Halteschaltung (10) ein viertes D-Flipflop (10a) vorgesehen ist, dessen D-Eingang mit dem zweiten Datenhilfstakt-Eingang (9), dessen Q̅-Ausgang mit einem dritten Eingang des ersten NAND-Gatters (17a), dessen Takteingang mit dem zweiten Digitalsignal-Eingang (8) und dessen Rücksetzeingang mit dem Ausgang des UND-Gatters (20) verbunden sind.

10. Phasensensor nach den Ansprüchen 7 und 8,
**dadurch gekennzeichnet,**
daß als zweite Abtast- und Halteschaltung (10) das vierte D-Flipflop (10a) vorgesehen ist, dessen D-Eingang mit dem zweiten Datenhilfstakt-Eingang (9), dessen Q-Ausgang mit einem zweiten Eingang des zweiten NAND-Gatters (17b), dessen Takteingang mit dem zweiten Digitalsignal-Eingang (8) und dessen Setzeingang mit dem Ausgang des NOR-Gatters (30) verbunden sind.

## Claims

1. Method for generating a correction signal (K) in a digital clock recovery device upon attainment of a defined phase spacing between a digital signal (DS1; DS2a, DS2b) and a first auxiliary data clock (DHT1) allocated thereto, which represents a selection of one of a plurality of auxiliary clocks that changes with the phase spacing, said auxiliary clocks having the same frequency, which is somewhat higher or lower than the bit rate of the digital signal (DS1; DS2a, DS2b), and having the same phase spacing with respect to one another, characterized in that the auxiliary data clock (DHT1) is sampled with the leading edge of the pulses of the digital signal (DS1; DS2a, DS2b) until an edge of a selected edge type of the auxiliary data clock (DHT1) is detected by means of a change of state in the samples, and in that the correction signal (K) is then released.

2. Method according to Claim 1, characterized in that the sampling is inhibited for the duration of the correction signal (K).

3. Method according to Claim 1, characterized in that a symmetrical pulse is selected as first auxiliary data clock (DHT1), and in that the edge type at whose edges the defined phase spacing is 0.5 UI is selected for the detection.

4. Phase sensor having logical components for generating a correction signal (K) in a digital clock recovery device upon attainment of a defined phase spacing between a digital signal (DS1; DS2a, DS2b) and a first auxiliary data clock (DHT1) allocated thereto, which represents a selection of one of a plurality of auxiliary clocks that changes with the phase spacing, said auxiliary clocks having the same frequency, which is somewhat higher or lower than the bit rate of the digital signal (DS1; DS2a, DS2b), and having the same phase spacing with respect to one another, characterized in that a first sample-and-hold circuit (3) with a first auxiliary data clock input (2) and with a first digital signal input (1) is provided, so that the auxiliary data clock (DHT1) is sampled with the digital signal (DS1 DS2a, DS2b), and in that a means (6) for generating the correction signal (K) is provided, which means is connected downstream of the sample-and-hold circuit (3).

5. Phase sensor according to Claim 4, characterized in that a first D-flipflop (3a) is provided as first sample-and-hold circuit (3), the D-input of which is connected to the first auxiliary data clock input (2) and the clock input of which is connected to the first digital signal input (1).

6. Phase sensor for a clock recovery device that operates with negative frequency deviation according to Claim 4 or 5, characterized in that there are provided in a means (6a1) for generating the correction signal (K): a first NAND gate (17a), the first input of which is connected to the output of the first sample-and-hold circuit (3, 3a);
a first D-flipflop with test inputs (18), the D-input of which is connected to the output of the first NAND gate (17a), the clock input of which is connected to the first auxiliary data clock input (2), the TI input of which is connected to an input (22) for a logical state "L", the reset input of which is connected to a setting signal input (21) and the Q̅-output of which is connected to the second input of the first NAND gate (17a);
a second D-flipflop with test inputs (19), the D-input of which is connected to the Q-output of the first D-flipflop with text inputs (18), the clock input of which is connected to the first auxiliary data clock input (2), the reset input of which is connected to the setting signal input (21), the TI input of which is connected to the input (22) for a logical state "L" and the Q-output of which is connected to a correction signal output (7) as well as to the TE inputs of the first and second D-flipflops with test inputs (18, 19); and
a first AND gate (20), the first input of which is connected to the Q̅-output of the second D-flipflop with test inputs (19), the second input of which is connected to the setting signal input (21) and the reset inputs of the first and second D-flipflops with test inputs (18, 19), the third input of which is connected to the second input of the first NAND gate (17a) and the output of which is connected to a reset input of the first sample-and-hold circuit (3, 3a).

7. Phase sensor for a clock recovery device that operates with positive frequency deviation according to Claim 4 or 5, characterized in that there are provided in a means (6a2) for generating the correction signal (K): a second NAND gate (17b), the first input of which is connected to the output of the first sample-and-hold circuit (3, 3a);
a second D-flipflop (23), the D-input of which is connected to the output of the second NAND gate (17b), the clock input of which is connected to an input (31) for a second auxiliary data clock (DHT2) which has a fixed phase spacing in comparison with the first auxiliary data clock (DHT1), and the reset input of which is connected to a set input of the first D-flipflop (3a);
a third D-flipflop with test inputs (24), the D-input of which is connected to the Q-output of the second D-flipflop (23), the clock input of which is connected to the input (31) for the second auxiliary data clock (DHT2), the Q-output of which is connected to the correction signal output (7) and the test input of which is connected to an input (32) for a logical state "H";
a third D-flipflop (25), the D-input of which is connected to the Q-output and the test enable input of the third D-flipflop with test inputs (24) and the reset input of which is connected to the setting signal input (21);
a third NAND gate (26), the first input of which is connected to the first auxiliary data clock input (2) and the second input of which is connected to the setting signal input (21);
an inverter (27), the input of which is connected to the setting signal input (21);
an OR gate (28), the first input of which is connected to the output of the inverter (27) and the second input of which is connected to the Q-output of the third D-flipflop (25);
a fourth NAND gate (29), the first input of which is connected to the output of the third NAND gate (26), the second input of which is connected to the output of the OR gate (28) and the output of which is connected to the reset input of the third D-flipflop with test inputs (24); and
a NOR gate (30), the first input of which is connected to the Q-output of the third D-flipflop (25), the second input of which is connected to the Q-output of the third D-flipflop with test inputs (24), the third input of which is connected to the output of the inverter (27) and the output of which is connected to the set input of the first D-flipflop (3a) and the reset input of the second D-flipflop (23).

8. Phase sensor according to Claim 4 or 5, characterized in that a second sample-and-hold circuit (10) with a second digital signal input (8) and with a second auxiliary data clock input (9) is provided, and in that a conductive connection is provided between both inputs (2, 9) for the first auxiliary data clock (DHT1).

9. Phase sensor according to Claims 6 and 8, characterized in that a fourth D-flipflop (10a) is provided as second sample-and-hold circuit (10), the D-input of which is connected to the second auxiliary data clock input (9), the Q̅-output of which is connected to a third input of the first NAND gate (17a), the clock input of which is connected to the second digital signal input (8) and the reset input of which is connected to the output of the AND gate (20).

10. Phase sensor according to Claims 7 and 8, characterized in that the fourth D-flipflop (10a) is provided as second sample-and-hold circuit (10), the D-input of which is connected to the second auxiliary data clock input (9), the Q-output of which is connected to a second input of the second NAND gate (17b), the clock input of which is connected to the second digital signal input (8) and the set input of which is connected to the output of the NOR gate (30).

## Revendications

1. Procédé pour générer un signal de correction (K) dans un dispositif numérique de récupération de la cadence, lors de l'obtention d'un écart de phase défini entre un signal numérique (DS1; DS2a,DS2b) et une première cadence auxiliaire de données (DHT1), qui est associée à ce dernier et qui représente un choix changeant avec l'écart de phase, d'une parmi plusieurs cadences auxiliaires, qui ont la même fréquence, qui est supérieure ou inférieure au débit binaire du signal numérique (DS1;DS2a,DS2b), et qui présentent un même écart de phase,
caractérisé par le fait
que la cadence auxiliaire de données (DHT1) est échantillonnée avec les flancs antérieurs des impulsions du signal numérique (DS1;DS2a,DS2b), jusqu'à ce que, lors des tests d'échantillonnage, et par l'intermédiaire d'une modification d'état, un flanc d'un type de flanc choisi de la cadence auxiliaire de données (DHT1) soit reconnu, et
que le signal de correction (K) soit alors déclenché.

2. Procédé suivant la revendication 1,
caractérisé par le fait
que l'échantillonnage est bloqué pendant la durée du signal de correction (K).

3. Procédé suivant la revendication 1,
caractérisé par le fait
qu'une impulsion symétrique est choisie comme première cadence auxiliaire de données (DHT1) et
que, pour la reconnaissance, on choisit un type de flanc pour les flancs qui présentent l'écart de phase défini de 0,5 UI.

4. Détecteur de phase comportant des modules logiques pour la production d'un signal de correction (K) dans un dispositif numérique de récupération de la cadence lors de l'obtention d'un écart de phase défini entre un signal numérique (DS1; DS2a, DS2b) et une première cadence auxiliaire de données (DHT1), qui lui est associée et qui représente un choix, qui change avec l'écart de phase, d'une parmi plusieurs cadences auxiliaires, qui ont la même fréquence, qui est supérieure ou inférieure au débit binaire du signal numérique (DS1; DS2a, DS2b), et qui ont un même écart de phase,
caractérisé par le fait
qu'il est prévu un premier circuit d'échantillonnage et de maintien (3) comportant une première entrée (2) de la cadence auxiliaire de données et une première entrée (1) du signal numérique, en sorte que la cadence auxiliaire de données (DHT1) est échantillonnée avec le signal numérique (DS1, DS2a, DS2b), et
qu'il est prévu un dispositif (6) pour la production du signal de correction (K), qui est branché en aval au circuit d'échantillonnage et de maintien (3).

5. Détecteur de phase suivant la revendication 4,
caractérisé par le fait
qu'il est prévu, en tant que circuit d'échantillonnage et de maintien (3), un premier multivibrateur bistable-D (3a), dont l'entrée-D est reliée à la première entrée (2) de la cadence auxiliaire de données et dont l'entrée de cadence est reliée à la première entrée (1) du signal numérique.

6. Détecteur de phase pour un dispositif de récupération de cadence travaillant en variations négatives de fréquence, suivant la revendication 4 ou 5, caractérisé par le fait
que dans un dispositif (6a1) de production du signal de correction (K), il est prévu
une première porte NON-ET (17a), dont la première entrée est reliée à la sortie du premier circuit d'échantillonnage et de maintien (3,3a),
un premier multivibrateur bistable-D à entrées de test (18), dont l'entrée-D est reliée à la sortie de la première porte NON-ET (17a), dont l'entrée de cadence est reliée à la première entrée (2) de la cadence auxiliaire de données, dont l'entrée-TI est reliée à une entrée (22) pour un état logique "L", dont l'entrée de remise à l'état initial est reliée à une entrée (21) du signal de réglage et dont la sortie-Q̅ est reliée à la deuxième entrée de la première porte NON-ET (17a),
un deuxième multivibrateur bistable-D à entrées de test (19), dont l'entrée-D est reliée à la sortie-Q du premier multivibrateur bistable-D à entrée de test (18), dont l'entrée de cadence est reliée à la première entrée (2) de la cadence auxiliaire de données, dont l'entrée de remise à l'état initial est reliée à l'entrée (21) du signal de réglage, dont l'entrée-TI est reliée à l'entrée (22) pour un état logique "L", et dont la sortie-Q est reliée à une sortie de signal de correction (7) ainsi qu'aux entrées-TE du premier et du deuxième multivibrateurs bistables-D à entrées de test (18,19) et
une première porte ET (20), dont la première entrée est reliée à la sortie-Q̅ du deuxième multivibrateur bistable-D à entrées de test (19), dont la deuxième entrée est reliée à l'entrée (21) du signal de réglage et aux entrées de remise à l'état initial du premier et du deuxième multivibrateurs bistables-D à entrées de test (18,19), dont la troisième entrée est reliée à la deuxième entrée de la première porte NON-ET (17a) et dont la sortie est reliée à une entrée de remise à l'état de réglage du premier circuit d'échantillonnage et de maintien (3,3a).

7. Détecteur de phase pour un dispositif de récupération de cadence travaillant en variations positives de fréquence, suivant la revendication 4 ou 5, caractérisé par le fait
que dans un dispositif (6a2) pour la production du signal de correction (K), il est prévu
une deuxième porte NON-ET (17b), dont la première entrée est reliée à la sortie du premier circuit d'échantillonnage et de maintien (3,3a),
un deuxième multivibrateur bistable-D (23), dont l'entrée-D est reliée à la sortie de la deuxième porte NON-ET (17b), dont l'entrée de cadence est reliée à une entrée (31) pour une deuxième cadence auxiliaire de données (DHT2), qui a un écart de phase fixe par rapport à la première cadence auxiliaire de données (DHT1), et dont l'entrée de remise à l'état initial est reliée à une entrée de positionnement du premier multivibrateur bistable-D (3a),
un troisième multivibrateur bistable-D à entrées de test (24), dont l'entrée-D est reliée à la sortie-Q du deuxième multivibrateur bistable-D (23), dont l'entrée de cadence est reliée à l'entrée (31) pour la deuxième cadence auxiliaire de données (DHT2), dont la sortie-Q est reliée à la sortie (7) du signal de correction et dont l'entrée de test est reliée à une entrée (32) pour un état logique "H",
un troisième multivibrateur bistable-D (25), dont l'entrée-D est reliée à la sortie-Q et à l'entrée d'autorisation de test du troisième multivibrateur bistable-D à entrées de test (24) et dont l'entrée de remise à l'état initial est reliée à l'entrée (21) dusignal de réglage,
une troisième porte NON-ET (26), dont la première entrée est reliée à la première entrée (2) de la cadence auxiliaire de données et dont la deuxième entrée est reliée à l'entrée (21) du signal de réglage,
un inverseur (27) dont l'entrée est reliée à l'entrée (21) du signal de réglage,
une porte OU (28), dont la première entrée est reliée à la sortie de l'inverseur (27) et dont la deuxième entrée est reliée à la sortie-Q du troisième multivibrateur bistable-D (25),
une quatrième porte NON-ET (29), dont la première entrée est reliée à la sortie de la troisième porte NON-ET (26), dont la deuxième entrée est reliée à la sortie de la porte OU (28) et dont la sortie est reliée à l'entrée de remise à l'état initial du troisième multivibrateur bistable-D à entrées de test (25), et
une porte NON-OU 30, dont la première entrée est reliée à la sortie-Q du troisième multivibrateur bistable-D (25), dont la deuxième entrée est reliée à la sortie-Q du troisième multivibrateur bistable-D à entrées de test (24), dont la troisième entrée est reliée à la sortie de l'inverseur (27) et dont la sortie est reliée à l'entrée de positionnement du premier multivibrateur bistable-D (3a) et à l'entrée de remise à l'état initial du deuxième multivibrateur bistable-D (23).

8. Détecteur de phase suivant la revendication 4 ou 5, caractérisé par le fait
qu'il est prévu un deuxième circuit d'échantillonnage et de maintien (10) comportant une deuxième entrée (8) du signal numérique et une deuxième entrée (9) de la cadence auxiliaire de données et
qu'il est prévu une liaison conductrice entre les deux entrées (2,9) pour la première cadence auxiliaire de données (DHT1).

9. Détecteur de phase suivant les revendications 6 et 8,
caractérisé par le fait
qu'il est prévu, comme deuxième circuit d'échantillonnage et de maintien (10), un quatrième multivibrateur bistable-D (10a), dont l'entrée-D est reliée à la deuxième entrée (9) de la cadence auxiliaire de données, dont la sortie-Q̅ est reliée à une troisième entrée de la première porte NON-ET (17a), dont l'entrée de cadence est reliée à la deuxième entrée (8) du signal numérique et dont l'entrée de remise à l'état initial est reliée à la sortie de la porte ET (20).

10. Détecteur de phase suivant les revendications 7 et 8,
caractérisé par le fait
qu'il est prévu, en tant que deuxième circuit d'échantillonnage et de maintien (10), le quatrième multivibrateur bistable-D (10a), dont l'entrée-D est reliée à la deuxième entrée (9) de la cadence auxiliaire de données, dont la sortie-Q est reliée à une deuxième entrée de la deuxième porte NON-ET (17b), dont l'entrée de cadence est reliée à la deuxième entrée (8) du signal numérique et dont l'entrée de positionnement est reliée à la sortie de la porte NON-OU (30).
